# EUROPEAN PATENT SPECIFICATION

(11) **EP 3 604 056 B1**
(45) Date of publication and mention of the grant of the patent: **27.09.2023**
(21) Application number: 19186245.7
(22) Date of filing: 15.07.2019
(51) Int. Cl.: B60T 8/26, B60T 11/21, B62D 11/08

(54) **POWER BRAKE VALVE**
SERVOBREMSVENTIL
SOUPAPE DE FREIN ÉLECTRIQUE

(30) Priority: 03.08.2018 IT 201800007831
(43) Date of publication of application: 05.02.2020
(73) Proprietor: CNH Industrial Italia S.p.A., 10156 Torino (IT)
(72) Inventor: DIGESU´, Pasquale, 41123 Modena (IT)
(74) Representative: Studio Torta S.p.A.

(56) References cited:
- EP-A2- 0 314 641
- WO-A1-01/30625
- WO-A1-2007/053231

## Description

### TECHNICAL FIELD

The present invention concerns a power brake valve, in particular a power brake valve for a work vehicle, such as an agricultural vehicle.

### BACKGROUND OF THE INVENTION

Work vehicles, e.g. an agricultural vehicle such as a tractor, comprise rear and front brakes configured to impart a braking torque to rear and front axles to stop the vehicle in a predefined time and/or length.

Usually, work vehicles comprise front wheels which are smaller than rear wheels, thus front wheel hubs have a diameter which is consequently smaller than the one of rear wheel; in view of the preceding, front brakes are of reduced dimensions. Therefore, in order to increase braking torque on front wheels it is necessary to increase the pressure of braking fluid since brakes dimensions cannot be increased.

Moreover, agricultural vehicles are constantly improved to allow reaching a higher travel speed e.g. reaching 60 km/h; thus, it is further necessary to increase the capability of front brake which need to impart about 40-50% of the total brake torque imparted to the vehicle. Since such capability cannot be increased by increasing front brake dimensions because of the above limitations, it is necessary
to further increase fluid brake pressure.

To this aim it is known to provide specific fluid alimentations at different pressure for rear and front brakes; in particular it is known to provide a specific power brake valve, having a single pressure delivery set for each of rear and front brakes. According to known hydraulic architecture, rear brakes are fed by a power valve and front brakes use another pressure source which is controlled by a relay valve piloted by the aforementioned power valve.

WO01/30625A1 discloses a hydraulic braking arrangement according to the preamble of claim 1.

Therefore, the need is felt to provide a power brake valve which is purely hydraulic and configured to provide different values of pressure to rear and front wheels of a work vehicle in an optimized and economic way.

An aim of the present invention is to satisfy the above mentioned needs.

### SUMMARY OF THE INVENTION

The aforementioned aim is reached by a power brake valve as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a hydraulic scheme which discloses a hydraulic circuit comprising a power brake valve according to the invention;
- Figure 1A is the hydraulic scheme of figure 1 in a different operative condition;
- Figure 2 is a hydraulic scheme which discloses a hydraulic circuit comprising a power brake valve according to a first alternative embodiment of the invention;
- Figure 2A is the hydraulic scheme of figure 2 in a different operative condition;
- Figure 3 is a hydraulic scheme which discloses a hydraulic circuit comprising a power brake valve according to a third alternative embodiment of the invention;
- Figure 3A is the hydraulic scheme of figure 3 in a different operative condition;
- Figure 4 is a hydraulic scheme which discloses a hydraulic circuit comprising a power brake valve according to a fourth alternative embodiment of the invention; and
- Figure 4A is the hydraulic scheme of figure 4 in a different operative condition;

### DETAILED DESCRIPTION OF THE INVENTION

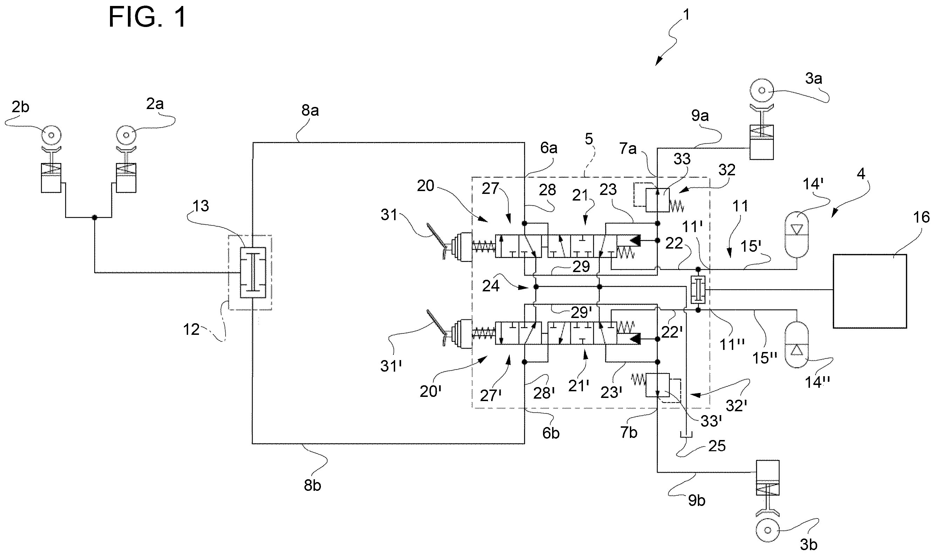

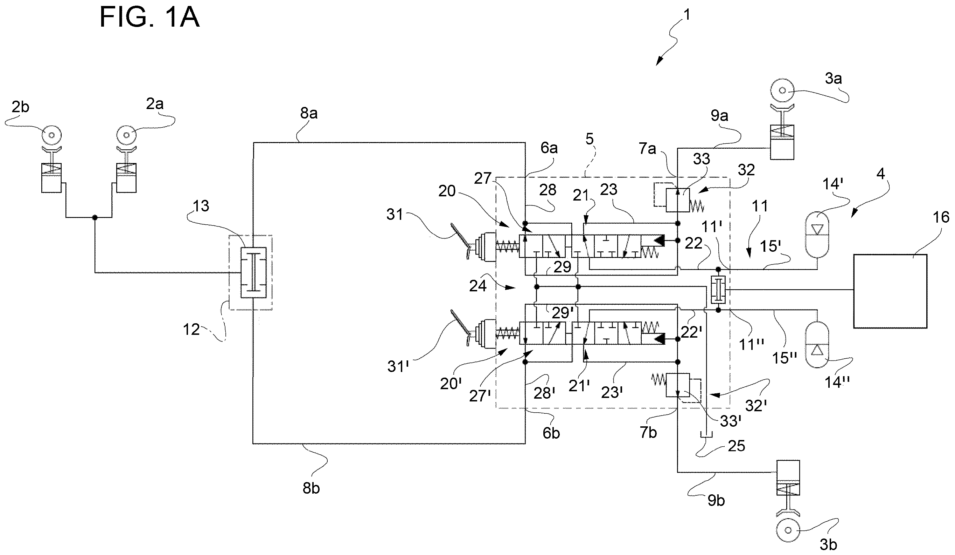

Figures 1 to 4 disclose a hydraulic braking arrangement 1 for a work vehicle comprising a pair of front brakes 2 and rear brakes 3, in particular a right and left front brakes 2a, 2b and right and left rear brakes 3a, 3b.

According to the invention hydraulic braking arrangement 1 further comprises a power brake valve 5 fluidly interposed between a common source 4 of fluid in pressure and front and rear brakes 2, 3, power brake valve 5 is configured to receive the fluid at a predefined pressure level from source 4 and to allow the passage of such fluid at a least one different pressure level with respect to the predefined pressure level of source 4 to at least one of brakes 2a, 2b, 3a, 3b.

Preferably, source 4 is configured to provide fluid in pressure, e.g. oil, at a pressure of about 100-120 bar and power brake valve 5 is configured to allows passage of such fluid to front brakes 2 at the same pressure of source 4, considering the physical pressure drops in between, and to rear brakes 3 at a pressure which can vary from 10% to 100% of such front value.

Power brake valve 5 preferably comprises at least a first opening 6, preferably two openings 6a, 6b fluidly connected to left and right front brakes 2a, 2b via respective conduits 8a, 8b or 9a, 9b, at least a second opening 7, preferably two openings 7a, 7b fluidly connected to left and right rear brakes 3a, 3b via respective conduits 9a, 9b or 8a, 8b and at least a third opening 11 fluidly connected to source 4.

As known in the art, conduits 8a and 8b for fluidly connecting power brake module 5 to front brakes 2a, 2b may be connected together with a logic module 12, e.g. comprising a logic valve 13.

Figure 1 discloses a power brake valve 5 and the related hydraulic braking arrangement 1 according to a first embodiment of the invention in which source 4 comprises a first and a second accumulators 14', 14'' fluidly connected to respective openings 11', 11" to power brake module 5 via conduits 15', 15". Source 4 may further comprise a accumulator charging module 16 configured to keep accumulators 14', 14'' in determined working conditions.

According to the first embodiment power brake valve 5 comprises a first spool 20 fluidly interposed between source 4, first accumulator 14', and openings 6a, 7a and configured to allow passage of fluid in pressure from first accumulator 14' towards right brakes 2a, 3a.

In particular first spool 20 comprises a first stage 21 defining three ways and two positions, being fluidly connected to opening 11' via a conduit 22, to opening 7a via a conduit 23 and to a discharge 25 via a system of conduits 24.

First spool 20 further comprises a second stage 27, linked to first stage 21, defining three ways and two positions, being fluidly connected to opening 6a via a conduit 28, to conduit 23 via a conduit 29 and to a discharge 25 via the system of conduits 24.

Power brake valve 5 further comprises a second spool 20' fluidly interposed between source 4, second accumulator 14", and openings 6b, 7b and configured to allow passage of fluid in pressure from second accumulator 14'' towards left brakes 2b, 3b.

In particular second spool 20' comprises a first stage 21' defining three ways and two positions, being fluidly connected to opening 11" via a conduit 22', to opening 7b via a conduit 23' and to a discharge 25 via a system of conduits 24.

Second spool 20' further comprises a second stage 27' linked to first stage 21', defining three ways and two positions, being fluidly connected to opening 6b via a conduit 28', to conduit 23' via a conduit 29' and to a discharge 25 via the aforementioned system of conduits 24.

Preferably first and second spool 20, 20' are fluidly connected together to discharge 25 via system of conduits 24.

Each spool 20, 20' is actuated by a mechanical control input, e.g. given by a respective pedal 31, 31'in known way.

Power brake valve 5 further comprises pressure variation means 32, 32' fluidly interposed, respectively, on conduits 23, 23' between first stage 21 of first spool 20 and opening 7a and first stage 21' of second spool 20' and opening 7b. Pressure variation means 32, 32' are configured to vary the pressure of the fluid passing through them between an inlet and an outlet of these latter. Preferably pressure variation means 32, 32' are configured to reduce such pressure of at least at 10% of its value.

Advantageously, pressure variation means 32, 32' are configured to reduce the pressure of fluid passing from conduits 23, 23' to openings 7a, 7b so as to provide a braking fluid to rear brakes 3a, 3b at a pressure lower than the pressure of fluid provided to front brakes 2a, 2b. Pressure variation means 32, 32' may allow a fixed ratio of reduction of pressure or a variable ratio of reduction of pressure. Such fixed or variable ratio can be regulated mechanically or electronically in known way.

Preferably pressure variation means 32, 32' may comprise pressure reducing valve 33, 33', e.g. a compensated orifice. As known, such compensated orifice may be manually or electrically (e.g. by solenoid) regulated.

The operation of the above described embodiment is the following.

In a first operative condition, shown in figure 1, spools 20, 20' are positioned so that they do not allow the passage of fluid from accumulators 11, 11' towards brakes 2, 3; indeed residual fluid present in conduits 9a, 23,9b, 23', 8a, 28, 8b and 28' may flow to discharge 25 via conduits system 24.

In a second operative condition, shown in figure 1A, user pushes both pedals 31, 31' and spools 20, 20' position so as they allow the passage of fluid from accumulators 14, 14' towards brakes 2, 3. In such configuration fluid may flow from accumulators 14, 14'to openings 11', 11" via conduits 15, 15' and pass, via conduits 22 and stage 21, to conduits 23, 23'. Then, a portion of fluid flows via conduits 29, 29', second portions 27, 27', conduits 28, 28' through openings 6a, 6b and conduits 8a, 8b to front brakes 2 at the same pressure of the accumulators 14, 14'; the remaining portion passes through pressure reducing valve 33, 33' in which decreased its pressure and then through openings 7a, 7b flows via conduits 9a, 9b to rear brakes 3.

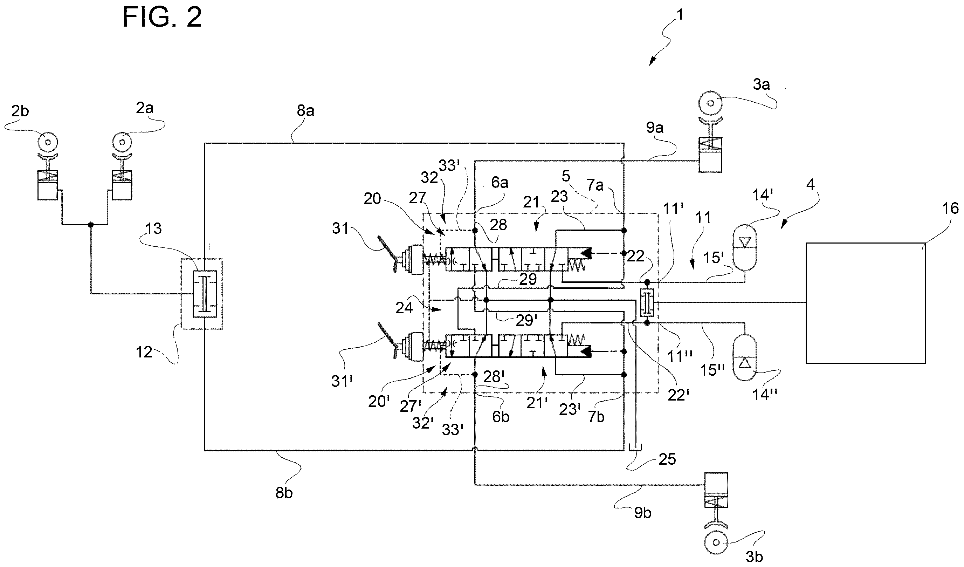

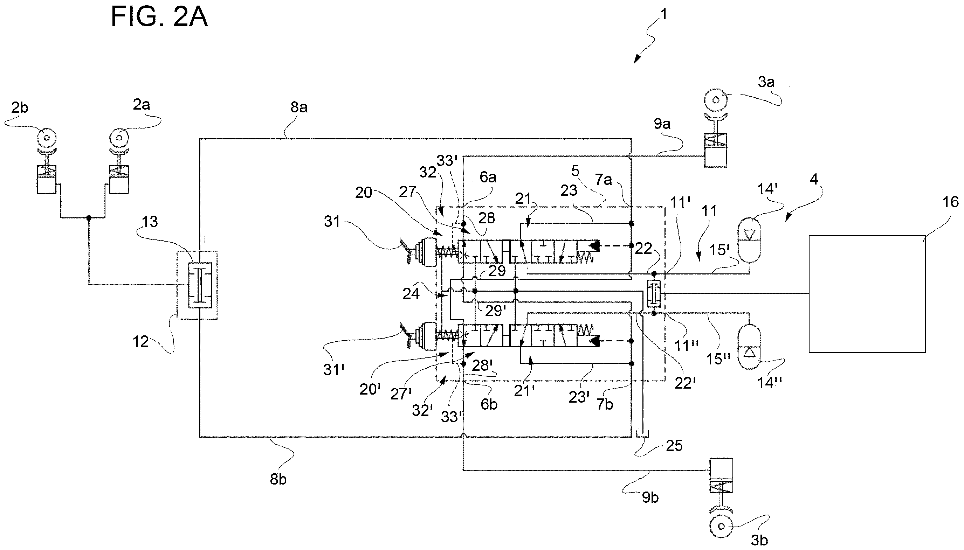

Figure 2 discloses a power brake valve 5 and the related hydraulic braking arrangement 1 according to a second embodiment of the invention in which source 4 comprises a first and a second accumulators 14', 14'' fluidly connected to respective openings 11', 11" to power brake module 5 via conduits 15', 15''. Source 4 may further comprises a accumulator charging module 16' configured to keep accumulators 14', 14'' in wanted working conditions.

According such second embodiment power brake valve 5 comprises a first spool 20 fluidly interposed between source 4, first accumulator 14', and openings 6a, 7a and configured to allow passage of fluid in pressure from first accumulator 14' towards right brakes 2a, 3a.

In particular first spool 20 comprises a first stage 21 defining three ways and two positions, being fluidly connected to opening 11' via a conduit 22, to opening 7a via a conduit 23 and to a discharge 25 via a system of conduits 24.

Power brake valve 5 further comprises a second spool 20' fluidly interposed between source 4, second accumulator 14", and openings 6b, 7b and configured to allow passage of fluid in pressure from second accumulator 14" towards left brakes 2b, 3b.

In particular second spool 20' comprises a first stage 21' defining three ways and two positions, being fluidly connected to opening 11" via a conduit 22', to opening 7b via a conduit 23' and to a discharge 25 via a system of conduits 24.

First spool 20 further comprises a second stage 27, linked by one side to first stage 21, defining three ways and two positions, being fluidly connected to opening 6a via a conduit 28, to conduit 23' of second spool 20' via a conduit 29 and to a discharge 25 via the aforementioned system of conduits 24.

Second spool 20' further comprises a second stage 27', linked by one side to first stage 21', defining three ways and two positions, being fluidly connected to opening 6b via a conduit 28', to conduit 23 of first spool 20 via a conduit 29' and to a discharge 25 via the aforementioned system of conduits 24.

Preferably first and second spool 20, 20' are fluidly connected together to discharge 25 via system of conduits 24 and by conduits 28, 28' which fluidically link together second stages 27, 27' with respectively conduits 23, 23' of the opposite spool 20, 20'.

Each spool 20, 20' is driven by a mechanical control input, e.g. given by a respective pedal 31, 31'in known way.

Power brake valve 5 further comprises pressure variation means 32, 32' integrated, respectively, on conduits second stages 27, 27' of first and second spools 20, 20'. Pressure variation means 32, 32' are configured to vary the pressure of the fluid passing through stages 27, 27' between an inlet and an outlet of these latter, in particular to reduce the pressure of fluid passing in conduits 28, 28' to openings 6a, 6b so as to provide a braking fluid to rear brakes 3a, 3b at a pressure lower than the pressure of fluid provided to front brakes 2a, 2b. Also in such embodiment, pressure variation means 32, 32' may allow a fixed ratio of reduction of pressure or a variable ratio of reduction of pressure. Such fixed or variable ratio can be regulated mechanically or electronically in known way.

Preferably pressure variation means 32, 32' may comprise the above already cited devices.

The operation of the above described embodiment is the following.

In a first operative condition, shown in figure 2, spools 20, 20' are positioned so that they do not allow the passage of fluid from accumulators 11, 11' towards brakes 2, 3; indeed residual fluid present in conduits 9a, 23,9b, 23', 8a, 28, 8b and 28' may flow to discharge 25 via conduits system 24.

In a second operative condition, shown in figure 2A, user pushes both pedals 31, 31' and spools 20, 20' position so as they allow the passage of fluid from accumulators 11, 11' towards brakes 2, 3. In such configuration fluid may flow from accumulators 14, 14' to openings 11', 11" via conduits 15, 15' and pass, via conduits 22 and stage 21, to conduits 23, 23'; then a portion flows directly via conduits 8a, 8b through openings 7a, 7b to front brakes 2a, 2b. The remaining portion flows via conduits 29, 29' to second stages 27, 27'; during the passage in stages 27, 27', thanks to pressure variation means 32, 32, pressure is reduced and then reduced pressure fluid flows via conduits 28, 28' through openings 6a, 6b and then via conduits 9a, 9b to rear brakes 3a, 3b.

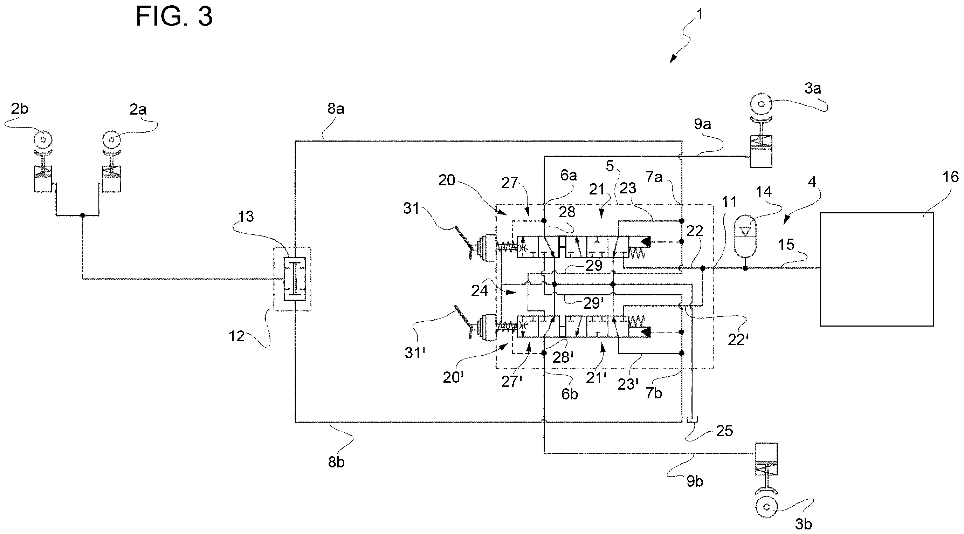

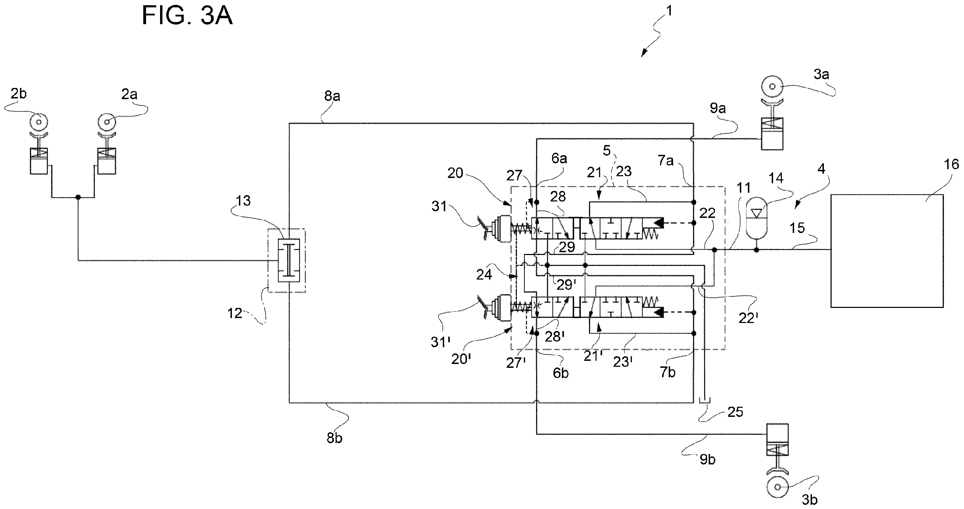

Figure 3 discloses a power brake valve 5 and the related hydraulic braking arrangement 1 according to a third embodiment of the invention in which source 4 comprises a single accumulator 14 fluidly connected to opening 11 to power brake module 5 via a conduit 15. Source 4 comprises a accumulator charging module 16' configured to keep accumulator 14 in wanted working conditions.

The remaining elements of power brake valve 5 are the same of the second embodiment and the operation is substantially the same, although fluid is imparted to conduits 22, 22' from a single accumulator 14, which is common for both spools 20, 20', instead of coming from two separate accumulators as in the second embodiment.

Due to the presence of a single accumulator 14, the hydraulic braking arrangement 1 is not redundant and therefore a dedicated emergency circuit should be provided for allowing emergency operation.

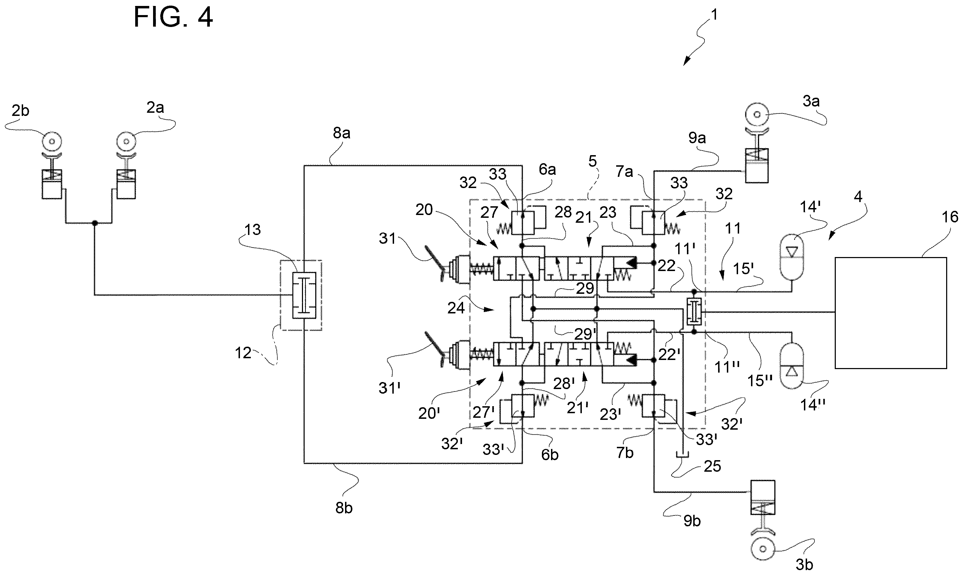

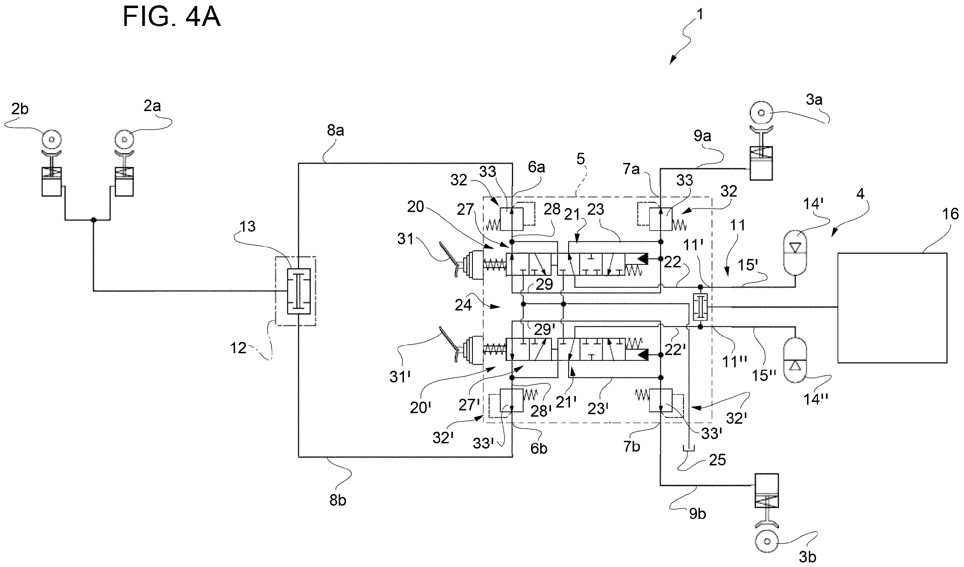

Figure 4 discloses a power brake valve 5 and the related hydraulic braking arrangement 1 according to a fourth embodiment of the invention being substantially a combination of the above described first and the second embodiments.

In particular, source 4 comprises a first and a second accumulators 14', 14'' fluidly connected to respective openings 11', 11" to power brake module 5 via conduits 15', 15". Source 4 further comprises an accumulator charging module 16' configured to keep accumulators 14', 14" in wanted working conditions.

According such fourth embodiment power brake valve 5 comprises a first spool 20 fluidly interposed between source 4, first accumulator 14', and openings 6a, 7a and configured to allow passage of fluid in pressure from first accumulator 14' towards right brakes 2a, 3a.

In particular first spool 20 comprises a first stage 21 defining three ways and two positions, being fluidly connected to opening 11' via a conduit 22, to opening 7a via a conduit 23 and to a discharge 25 via a system of conduits 24.

Power brake valve 5 further comprises a second spool 20' fluidly interposed between source 4, second accumulator 14", and openings 6b, 7b and configured to allow passage of fluid in pressure from second accumulator 14" towards left brakes 2b, 3b.

In particular second spool 20' comprises a first stage 21' defining three ways and two positions, being fluidly connected to opening 11" via a conduit 22', to opening 7b via a conduit 23' and to a discharge 25 via a system of conduits 24.

First spool 20 further comprises a second stage 27, linked by one side to first stage 21, defining three ways and two positions, being fluidly connected to opening 6a via a conduit 28, to conduit 23' of second spool 20' via a conduit 29 and to a discharge 25 via the aforementioned system of conduits 24.

Second spool 20' further comprises a second stage 27', linked by one side to first stage 21', defining three ways and two positions, being fluidly connected to opening 6b via a conduit 28', to conduit 23 of first spool 20 via a conduit 29' and to a discharge 25 via the aforementioned system of conduits 24.

Preferably first and second spool 20, 20' are fluidly connected together to discharge 25 via system of conduits 24 and by conduits 28, 28' which fluidically link together second stages 27, 27' with respectively conduits 23, 23' of the opposite spool 20, 20'.

Each spool 20, 20' is driven by a mechanical control input, e.g. given by a respective pedal 31, 31'in known way.

Power brake valve 5 further comprises pressure variation means 32, 32' fluidly interposed, respectively, on conduits 23, 23' and 28, 28' between first and second stages 21, 27 of spools 20, 20' and the respective openings 6a, 6b and 7a, 7b. Pressure variation means 32, 32' are configured to vary the pressure of the fluid passing through them between an inlet and an outlet of these latter.

Advantageously, pressure variation means 32, 32' are configured to reduce the pressure of fluid passing from conduits 23, 23' or 28, 28' to openings 6a, 6b or 7a, 7b so as to provide a braking fluid to front and rear brakes 2, 3 at a pressure lower than the pressure of the fluid stored in accumulators 14', 14". Pressure variation means 32, 32' may allow a fixed ratio of reduction of pressure or a variable ratio of reduction of pressure. Such fixed or variable ratio can be regulated mechanically or electronically in known way.

Pressure variation means 32, 32' may comprise the above already cited devices.

The operation of the above described embodiment is the following.

In a first operative condition, shown in figure 4, spools 20, 20' are positioned so that they do not allow the passage of fluid from accumulators 11, 11' towards brakes 2, 3; indeed residual fluid present in conduits 9a, 23,9b, 23', 8a, 28, 8b and 28' may flow to discharge 25 via conduits system 24.

In a second operative condition, shown in figure 4A, user pushes both pedals 31, 31' and spool 20, 20' position so as they allow the passage of fluid from accumulators 11, 11' towards brakes 2, 3. In such configuration fluid may flow from accumulators 14, 14' to openings 11', 11" via conduits 15, 15' and pass, via conduits 22 and stage 21, to conduits 23, 23' . Then, a portion of fluid flows via conduits 29, 29' through second portions 27, 27' of the opposite spools 20, 20' and then via conduits 28, 28' through pressure reducing valve 33 in which decreased its pressure and then flow via conduits 8a, 8b to front brakes 3. The remaining portion passes through pressure reducing valve 33, 33' in which decreased its pressure then through openings 7a, 7b and flow via conduits 9a, 9b to rear brakes 3.

In view of the foregoing, the advantages of a power brake valve 5 and related hydraulic braking arrangement 1 according to the invention are apparent.

First, power brake valve 5 functions are improved and allow to potentially provide different fluid pressure levels on each of left and right front and rear brakes 2, 3 with a single source 4 of fluid in pressure.

Thanks to such different fluid pressure at front and rear brakes 2, 3, it is possible optimize fluid pressure level according to the different axles and to easily manage brake distribution between front and rear brakes 2, 3.

It is possible to use reduced dimensions brakes on one of the axles because of the higher pressure fluid available.

Further, it is possible to differentiate pressure for left and right brake and to achieve a steer by brake functionality of the system. In particular, it is possible to provide a different level of pressure to each of the four brakes and therefore, thanks to an electronic system together with dedicated sensors, it could be possible to control independently each wheel.

The use of a power brake valve 5 according to the invention further reduces the elements of the hydraulic braking arrangement 1 with respect to known circuits and allow a great versatility of this latter in function of the typology of vehicle.

Indeed, a single power valve can control both front and rear brake wheels and therefore it is no more necessary to use an additional relay valve as known in the art.

Moreover, some of the disclosed embodiments (figures 1, 2, 4) allow to provide service and emergency brake thanks to the independence of right and left systems which, hydraulically crossed, allow to provide emergency braking if one the two accumulators 14', 14" of the source of fluid is failed.

Conversely the embodiment of figure 3, comprising a single accumulator 14, allow to reduce costs and spaces although it cannot achieve an emergency operation if accumulator 14 fails.

It is clear that modifications can be made to the described power brake valve 5 and related hydraulic braking arrangement 1 which do not extend beyond the scope of protection defined by the claims.

For example, the above described embodiments may be further combined together to define a plurality of different hydraulic topologies.

Further, it is clear the pressure variation means 32 may comprise any typology of hydraulic or hydro-electric devices such as restrictors, check valves or orifices etc.

Source 4 may comprise different typologies and number of accumulators 14 and recharging module 16; similarly, logic module 12 may comprise different typologies of hydraulic circuits or valves.

## Claims

1. Hydraulic braking arrangement (1) for a work vehicle comprising a power brake valve (5), a source of fluid (4) in pressure and a pair, right and left, of front and rear brakes (2a, 2b 3a, 3b), said power brake valve (5) being configured to receive fluid from said source (4) at a predefined pressure level and allow the passage of said fluid at a least one different pressure level with respect to said predefined pressure level to at least one of said brakes (2a, 3a, 2b, 3b) ;
**characterized in that** said power brake valve (5) at least defines a first pair of openings (6a, 6b) fluidly connected to said pair of front brakes (2), a second pair of openings (7a, 7b) fluidly connected to said pair of rear brakes (3) and a least an opening (11) fluidly connected to said source of fluid (4) and comprises a first and a second spools (20, 20') configured to selectively allow the passage of fluid from said source (4) towards said front and rear brakes (2, 3) via said openings (6a, 6b; 7a, 7b) and pressure variation means (32, 32') fluidly interposed between said first and second spools (20, 20') and at least two of said openings (6a, 6b; 7a, 7b) so as to vary the pressure of said fluid provided by said source (4) to said brakes (2a, 3a, 2b, 3b).

2. Hydraulic braking arrangement according to claim 1, wherein said pressure variation means (32, 32') are fluidly interposed between said first and second spools (20, 20') and openings (7a, 7b) so as to vary the pressure of fluid coming from said source (4) to said rear brakes (3).

3. Hydraulic braking arrangement according to claim 1 or 2, wherein said pressure variation means (32, 32') are fluidly interposed between said first and second spools (20, 20') and openings (6a, 6b) so as to vary the pressure of fluid coming from said source (4) to said front brakes (2).

4. Hydraulic braking arrangement according to claim 1 or 2, wherein said pressure variation means (32, 32') are fluidly interposed between said first and second spools (20, 20') and openings (6a, 7a) so as to vary the pressure of fluid coming from said source (4) to right front and rear brakes (2a, 3a) or between said first and second spools (20, 20') and openings (6b, 7b) so as to vary the pressure of fluid coming from said source (4) to left front and rear brakes (2b, 3b).

5. Hydraulic braking arrangement according to any of claims 1 to 4, wherein said pressure variation means (32) are integrated in at least one of said spools (20, 20').

6. Hydraulic braking arrangement according to any of claims 1 to 5, wherein said pressure variation means (32, 32') have a fixed variation ratio of pressure between respective inlets and outlets of said pressure variation means (32, 32').

7. Hydraulic braking arrangement according to any of claims 1 to 5, wherein said pressure variation means (32, 32') have a variable variation ratio of pressure between respective inlets and outlets of said pressure variation means (32, 32').

8. Hydraulic braking arrangement according to claims 6 or 7, wherein said ratio is electrically regulated by a control unit.

9. Hydraulic braking arrangement according to any of the preceding claims, wherein said pressure variation means (32, 32') are configured to reduce the pressure of said fluid provided by said source (4).

10. Hydraulic braking arrangement according to claim 9, wherein said pressure variation means (32, 32') are configured to reduce the predefined pressure of said fluid provided by said source (4) down to 10% of such predefined pressure.

11. Hydraulic braking arrangement according to any of the preceding claims, wherein said pressure variation means (32, 32') comprises a pressure reducing valve (33, 33').

12. Hydraulic braking arrangement according any of the preceding claims, wherein said source (4) comprises at least one accumulator (14).

13. Hydraulic braking arrangement according any of the preceding claims, wherein said first and second spools (20, 20') are mechanically actuated.

## Patentansprüche

1. Hydraulische Bremsanordnung (1) für ein Arbeitsfahrzeug, die ein Bremskraftverstärkungsventil (5), eine Fluidquelle (4) unter Druck und ein Paar vorderer und hinterer Bremsen (2a, 2b, 3a, 3b) rechts und links umfasst, wobei das Bremskraftverstärkungsventil (5) konfiguriert ist, Fluid von der Quelle (4) mit einer zuvor definierten Druckhöhe zu erhalten und den Durchgang des Fluids mit wenigstens einer anderen Druckhöhe in Bezug auf die zuvor definierte Druckhöhe zu wenigstens einer der Bremsen (2a, 3a, 2b, 3b) zu ermöglichen;
**dadurch gekennzeichnet, dass** das Bremskraftverstärkungsventil (5) wenigstens ein erstes Paar Öffnungen (6a, 6b), die mit dem Paar vorderer Bremsen (2) fluidtechnisch verbunden sind, ein zweites Paar Öffnungen (7a, 7b), die mit dem Paar hinterer Bremsen (3) fluidtechnisch verbunden sind, und wenigstens eine Öffnung (11), die mit der Fluidquelle (4) fluidtechnisch verbunden ist, definiert, und einen ersten und einen zweiten Kolben (20, 20'), die so konfiguriert sind, dass sie wahlweise den Durchgang von Fluid von der Quelle (4) zu den vorderen und hinteren Bremsen (2, 3) über die Öffnungen (6a, 6b; 7a, 7b) ermöglichen, und Druckänderungsmittel (32, 32'), die fluidtechnisch zwischen dem ersten und dem zweiten Kolben (20, 20') und wenigstens zwei der Öffnungen (6a, 6b; 7a, 7b) angeordnet sind, um den Druck des Fluids zu ändern, das durch die Quelle (4) für die Bremsen (2a, 3a, 2b, 3b) bereitgestellt wird, umfasst.

2. Hydraulische Bremsanordnung nach Anspruch 1, wobei die Druckänderungsmittel (32, 32') fluidtechnisch zwischen dem ersten und zweiten Kolben (20, 20') und den Öffnungen (7a, 7b) angeordnet sind, um den Druck von Fluid zu ändern, das von der Quelle (4) zu den hinteren Bremsen (3) gelangt.

3. Hydraulische Bremsanordnung nach Anspruch 1 oder 2, wobei die Druckänderungsmittel (32, 32') fluidtechnisch zwischen dem ersten und zweiten Kolben (20, 20') und den Öffnungen (6a, 6b) angeordnet sind, um den Druck von Fluid zu ändern, das von der Quelle (4) zu den vorderen Bremsen (2) gelangt.

4. Hydraulische Bremsanordnung nach Anspruch 1 oder 2, wobei die Druckänderungsmittel (32, 32') fluidtechnisch zwischen dem ersten und zweiten Kolben (20, 20') und den Öffnungen (6a, 7a) angeordnet sind, um den Druck von Fluid zu ändern, das von der Quelle (4) zu der rechten vorderen und hinteren Bremse (2a, 3a) gelangt, oder fluidtechnisch zwischen dem ersten und zweiten Kolben (20, 20') und den Öffnungen (6b, 7b) angeordnet sind, um den Druck von Fluid zu ändern, das von der Quelle (4) zu der linken vorderen und hinteren Bremse (2b, 3b) gelangt.

5. Hydraulische Bremsanordnung nach einem der Ansprüche 1 bis 4, wobei die Druckänderungsmittel (32) in wenigstens einen der Kolben (20, 20') integriert sind.

6. Hydraulische Bremsanordnung nach einem der Ansprüche 1 bis 5, wobei die Druckänderungsmittel (32, 32') ein festes Änderungsverhältnis eines Drucks zwischen den entsprechenden Einlässen und Auslässen der Druckänderungsmittel (32, 32') haben.

7. Hydraulische Bremsanordnung nach einem der Ansprüche 1 bis 5, wobei die Druckänderungsmittel (32, 32') ein veränderbares Änderungsverhältnis von Druck zwischen den entsprechenden Einlässen und Auslässen der Druckänderungsmittel (32, 32') haben.

8. Hydraulische Bremsanordnung nach Anspruch 6 oder 7, wobei das Verhältnis durch eine Steuereinheit elektrisch geregelt wird.

9. Hydraulische Bremsanordnung nach einen der vorhergehenden Ansprüche, wobei die Druckänderungsmittel (32, 32') konfiguriert sind, den Druck von Fluid zu reduzieren, das durch die Quelle (4) bereitgestellt wird.

10. Hydraulische Bremsanordnung nach Anspruch 9, wobei die Druckänderungsmittel (32, 32') konfiguriert sind, den zuvor definierten Druck von Fluid, das durch die Quelle (4) bereitgestellt wird, auf 10 % des zuvor definierten Drucks zu reduzieren.

11. Hydraulische Bremsanordnung nach einem der vorhergehenden Ansprüche, wobei die Druckänderungsmittel (32, 32') ein Druckminderungsventil (33, 33') umfassen.

12. Hydraulische Bremsanordnung nach einem der vorhergehenden Ansprüche, wobei die Quelle (4) wenigstens einen Akkumulator (14) umfasst.

13. Hydraulische Bremsanordnung nach einem der vorhergehenden Ansprüche, wobei der erste und der zweite Kolben (20, 20') mechanisch betätigt werden.

## Revendications

1. Agencement de freinage hydraulique (1) pour un véhicule de travail comprenant une soupape de frein électrique (5), une source de fluide (4) sous pression et une paire, droite et gauche, de freins avant et arrière (2a, 2b, 3a, 3b), ladite soupape de frein électrique (5) étant configurée pour recevoir le fluide de ladite source (4) à un niveau de pression prédéfini et permettre le passage dudit fluide à au moins un niveau de pression différent par rapport audit niveau de pression prédéfini, jusqu'à au moins l'un desdits freins (2a, 3a, 2b, 3b) ;
**caractérisé en ce que** ladite soupape de frein électrique (5) définit au moins une première paire d'ouvertures (6a, 6b) raccordée de manière fluidique à ladite paire de freins avant (2), une seconde paire d'ouvertures (7a, 7b) raccordée, de manière fluidique, à ladite paire de freins arrière (3) et au moins une ouverture (11) raccordée, de manière fluidique, à ladite source de fluide (4) et comprend un premier et un second tiroir cylindrique (20, 20') configurés pour permettre sélectivement le passage du fluide de ladite source (4) vers lesdits freins avant et arrière (2, 3) via lesdites ouvertures (6a, 6b ; 7a, 7b) et des moyens de variation de pression (32, 32') intercalés de manière fluidique entre lesdits premier et second tiroirs cylindriques (20, 20') et au moins deux desdites ouvertures (6a, 6b ; 7a, 7b) afin de modifier la pression dudit fluide fourni par ladite source (4) auxdits freins (2a, 3a, 2b, 3b).

2. Agencement de freinage hydraulique selon la revendication 1, dans lequel lesdits moyens de variation de pression (32, 32') sont intercalés de manière fluidique entre lesdits premier et second tiroirs cylindriques (20, 20') et les ouvertures (7a, 7b) afin de modifier la pression de fluide allant de ladite source (4) auxdits freins arrière (3).

3. Agencement de freinage hydraulique selon la revendication 1 ou 2, dans lequel lesdits moyens de variation de pression (32, 32') sont intercalés de manière fluidique entre lesdits premier et second tiroirs cylindriques (20, 20') et les ouvertures (6a, 6b) afin de modifier la pression de fluide allant de ladite source (4) auxdits freins avant (2).

4. Agencement de freinage hydraulique selon la revendication 1 ou 2, dans lequel lesdits moyens de variation de pression (32, 32') sont intercalés de manière fluidique entre lesdits premier et second tiroirs cylindriques (20, 20') et les ouvertures (6a, 7a) afin de modifier la pression de fluide allant de ladite source (4) aux freins avant et arrière droits (2a, 3a) ou entre lesdits premier et second tiroirs cylindriques (20, 20') et les ouvertures (6b, 7b) afin de modifier la pression de fluide allant de ladite source (4) aux freins avant et arrière gauches (2b, 3b).

5. Agencement de freinage hydraulique selon l'une quelconque des revendications 1 à 4, dans lequel lesdits moyens de variation de pression (32) sont intégrés dans au moins l'un desdits tiroirs cylindriques (20, 20').

6. Agencement de freinage hydraulique selon l'une quelconque des revendications 1 à 5, dans lequel lesdits moyens de variation de pression (32, 32') ont un rapport de variation de pression fixe entre les entrées et les sorties respectives desdits moyens de variation de pression (32, 32').

7. Agencement de freinage hydraulique selon l'une quelconque des revendications 1 à 5, dans lequel lesdits moyens de variation de pression (32, 32') ont un rapport de variation de pression variable entre les entrées et les sorties respectives desdits moyens de variation de pression (32, 32').

8. Agencement de freinage hydraulique selon les revendications 6 ou 7, dans lequel ledit rapport est électriquement régulé par une unité de commande.

9. Agencement de freinage hydraulique selon l'une quelconque des revendications précédentes, dans lequel lesdits moyens de variation de pression (32, 32') sont configurés pour réduire la pression dudit fluide fourni par ladite source (4).

10. Agencement de freinage hydraulique selon la revendication 9, dans lequel lesdits moyens de variation de pression (32, 32') sont configurés pour réduire la pression prédéfinie dudit fluide fourni par ladite source (4) jusqu'à 10% d'une telle pression prédéfinie.

11. Agencement de freinage hydraulique selon l'une quelconque des revendications précédentes, dans lequel lesdits moyens de variation de pression (32, 32') comprennent une soupape de réduction de pression (33, 33').

12. Agencement de freinage hydraulique selon l'une quelconque des revendications précédentes, dans lequel ladite source (4) comprend au moins un accumulateur (14).

13. Agencement de freinage hydraulique selon l'une quelconque des revendications précédentes, dans lequel lesdits premier et second tiroirs cylindriques (20, 20') sont actionnés par voie mécanique.
